# EUROPÄISCHE PATENTSCHRIFT

(11) **EP 1 910 056 B1**
(45) Veröffentlichungstag und Bekanntmachung des Hinweises auf die Patenterteilung: **31.08.2016**
(21) Anmeldenummer: 06775722.9
(22) Anmeldetag: 17.07.2006
(51) Int. Cl.: B29C 49/12, B29C 49/42, B29C 49/06, B29C 49/36, B29C 49/64

(54) **VERFAHREN UND VORRICHTUNG ZUR POSITIONIERUNG EINES BAUELEMENTES**
METHOD AND DEVICE FOR POSITIONING A COMPONENT
PROCEDE ET DISPOSITIF DE POSITIONNEMENT D'UN COMPOSANT

(30) Priorität: 26.07.2005 DE 102005034846
(43) Veröffentlichungstag der Anmeldung: 16.04.2008
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrensburg (DE)
(74) Vertreter: Hausfeld, Norbert
(86) Internationale Anmeldenummer: PCT/DE2006/001265
(87) Internationale Veröffentlichungsnummer: WO 2007/012307

(56) Entgegenhaltungen:
- EP-A- 0 249 559
- WO-A1-99/48669
- DE-A1- 10 325 229
- JP-A- 7 259 801
- JP-A- 10 266 877
- JP-A- H09 272 147
- US-A- 5 615 593
- US-A- 6 016 875

## Beschreibung

Die Erfindung betrifft ein Verfahren zur Positionierung eines Bauelementes, bei dem ein Fluidantrieb das Bauelement entlang einer Führung bewegt, und bei dem mindestens eine Positionsmarkierung des Bauelementes von mindestens einem Sensor erfaßt sowie ein Ausgangssignal des Sensors einer Steuereinheit zugeführt wird und bei dem die Steuereinheit eine Position des Bauelements durch eine Variation der Zufuhr des Fluids in Abhängigkeit von Ausgangssignal des Sensors regelt, sowie bei dem als Fluidantrieb ein pneumatischer Antrieb verwendet wird nach dem Oberbegriff des Anspruchs 1.

Die Erfindung betrifft darüber hinaus eine Vorrichtung zur Positionierung eines Bauelementes, die einen Fluidantrieb sowie eine Führung für eine Bewegung des Bauelementes aufweist, sowie bei der das Bauelement mindestens eine Positionsmarkierung aufweist und im Bereich der Führung mindestens ein Sensor zur Erfassung der Positionsmarkierung angeordnet ist sowie bei dem der Sensor mit einer Steuereinheit für den Fluidantrieb verbunden ist, die mit einem Stellelement zur Variation der Zufuhr des Fluids in Abhängigkeit vom Ausgangssignal des Sensors und zur Durchführung einer Positions-regelung gekoppelt ist, und bei der der Fluidantrieb pneumatisch ausgebildet ist nach dem Oberbegriff des Anspruchs 10.

Verfahren und Vorrichtungen zur Positionierung eines Bauelementes werden beispielsweise bei der Blasformung von Behältern eingesetzt, bei denen ein Vorformling bei einer thermischen Konditionierung innerhalb einer Blasform von einer Reckstange gereckt und durch Blasdruckeinwirkung in den Behälter umgeformt wird. Die Reckstangen werden hierbei häufig von pneumatischen Zylindern positioniert stehe z.B. DE10325229.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von vorformlingen und die Verwendung von Spreizdornen, die zur Halterung in einen Mündungsbereich des vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine An-wendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine detaillierte Beschreibung eines Recksystems einer Blasstation mit zugeordneter Reckstange erfolgt in der DE-OS 101 45 579. Die Reckstange ist hier als ein massiver Stab ausgebildet und die Blasluft wird der Blasform durch einen Anschlußkolben hindurch zugeführt, der einen größeren Innendurchmesser aufweist, als der Außendurchmesser der Reckstange beträgt. Hierdurch wird zwischen der Reckstange und einer Innenfläche des Anschlußkolbens ein Ringspalt bereitgestellt, durch den das unter Druck stehende Gas hindurchströmen kann.

Die Verwendung einer hohlen Reckstange ist beispielsweise aus der DE-OS 28 14 952 bekannt. Ein Anschluß für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben.

Aus der DE-OS 103 25 229.0 ist es bereits bekannt, zur Positionierung einer Reckstange einen elektrischen Linearantrieb einzusetzen, der ähnlich zum Funktionsprinzip des Transrapid-Bahnsystems konstruiert ist. Derartige Linearmotoren ermöglichen eine hochgenaue Reproduzierbarkeit bei der Durchführung von Reckbewegungen, weisen jedoch ein vergleichsweise hohes Baugewicht und einen hohen Preis auf.

Aus der JP 10266877 A ist es bereits bekannt, die Kolbenposition eines hydraulischen Zylinders durch Rückkopplung des Meßsignals eines Positionssensors auf die Zuführung des hydraulischen Fluids zu steuern. Eine ähnliche Einrichtung wird auch in der US-A-6,016,875 beschrieben.

Aus der US-A-5,615,593 ist eine weitere Einrichtung zur Steuerung der Positionierung eines hydraulischen Aktuators bekannt.

In der JP 07259801 A wird eine Positionsregelung für den Kolben eines pneumatischen Zylinders beschrieben. Auch hier erfolgt eine Rückkopplung des Positionserfassungssystems auf eine Steuerung für die Zufuhr des gasförmigen Fluids. Eine ähnliche Einrichtung zur Steuerung der Position des Kolbens eines Pneumatikzylinders wird in der EP-A-0 249 559 offenbart.

Generell besitzen die bislang bekannt gewordenen Vorrichtungen zur Positionierung von Bauelementen jeweils eine Reihe individueller Vorteile, es können jedoch bislang noch nicht alle Anforderungen erfüllt werden, die an ein geringes Baugewicht, einen geringen Vorrichtungspreis sowie eine genaue Durchführung der Positionierungsbewegungen gestellt werden.

Aufgabe der vorliegenden Erfindung ist es, ein Verfahren der einleitend genannten Art derart zu verbessern, daß eine genaue Durchführung von Positionierbewegungen bei geringem resultierenden Vorrichtungsgewicht unterstützt wird.

Diese Aufgabe wird nach dem kennzeichnender Teil des Anspruchs 1 erfindungsgemäß dadurch gelöst, daß als Sensor ein Linearmotor verwendet wird.

Weitere Aufgabe der vorliegenden Erfindung ist es, eine Vorrichtung der einleitend genannten Art derart zu konstruieren, daß eine exakte Durchführung von Positionierbewegungen bei einem geringen Vorrichtungspreis und einem geringen Vorrichtungsgewicht ermöglicht wird.

Diese Aufgabe wird nach dem kennzeichnenden Teil des Anspruchs 10 erfindungsgemäß dadurch gelöst, daß der Sensor als Teil eines Linearmotors ausgebildet ist und daß der Fluidantrieb im Recksystem einer Blasmaschine angeordnet ist.

Durch die Kombination des Fluidantriebes mit einer Positionserfassung und einer positionsabhängigen Regelung der Zufuhr des Fluids ist es möglich, unter Verwendung eines einfachen und preiswerten pneumatisch angetriebenen Zylinder eine Positionsgenauigkeit zu erreichen, wie dies sonst nur bei Verwendung von Servoantrieben oder Linearmotoren möglich ist. Gegenüber der Verwendung derartiger Servomotoren oder Linearantriebe bietet die Verwendung eines geregelten Fluidantriebes den Vorteil einer äußerst großen Kompaktheit, einer hohen Robustheit sowie einer großen Kraftentfaltung je beanspruchtem Volumenelement. Durch die Regelung des Fluidantriebes könnten somit die Vorteile der bekannten Antriebssysteme miteinander kombiniert werden.

Ein einfacher konstruktiver Aufbau wird dadurch unterstützt, daß der Fluidantrieb eine lineare Bewegung durchführt.

Eine Genauigkeit der Positionserfassung läßt sich dadurch verbessern, daß der Sensor die Position einer Mehrzahl von Markierungen erfaßt.

Eine berührungslose Positionserfassung wird dadurch ermöglicht, daß die Positionserfassung optisch durchgeführt wird.

Eine weitere Ausführungsvariante besteht darin, daß die Positionserfassung magnetisch durchgeführt wird.

Eine exakte und schnelle Steuerbarkeit der Zufuhr des Fluids wird dadurch ermöglicht, daß von der Steuereinheit ein elektrisch steuerbares Ventil angesteuert wird.

Eine Ausführungsform zur Bereitstellung von hohen Stellkräften bei zugleich kompaktem Aufbau,wird dadurch erreicht, daß als Fluidantrieb ein innerhalb eines Zylinders geführter Kolben verwendet wird.

Eine schnelle und zugleich genaue Steuerbarkeit wird dadurch unterstützt, daß der Kolben zweiseitig vom Steuerdruck beaufschlagbar ist.

Eine weitere Verfahrensoptimisierung bei einer Durchführung von Blasvorgängen wird dadurch erreicht, daß eine Blasventilsteuerung in Abhängigkeit von einer vom Linearantrieb bereitgestellten Positionserfassung durchgeführt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger positioniert wird und
- Fig. 6: eine schematische Seitenansicht einer Blasstation, bei der die Reckstange durch eine Antriebsstange positioniert wird, auf die ein geregelter Pneumatikkolben einwirkt.

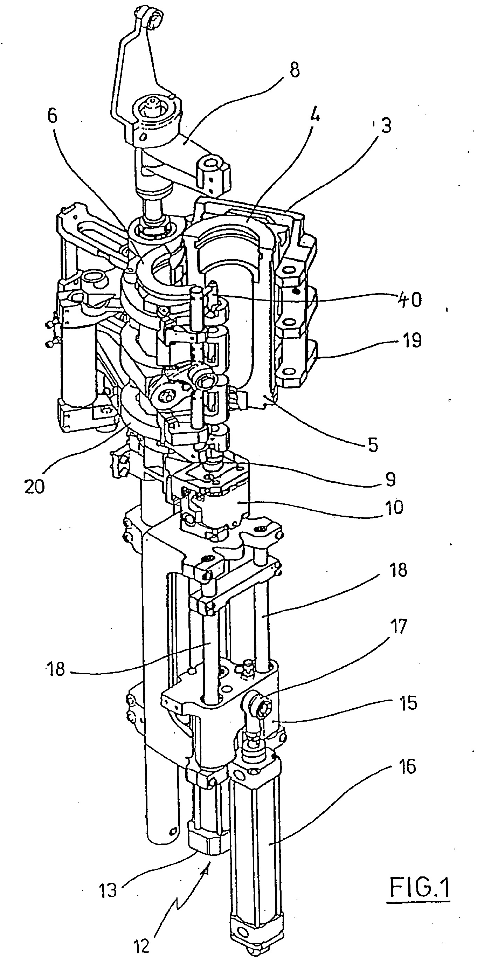

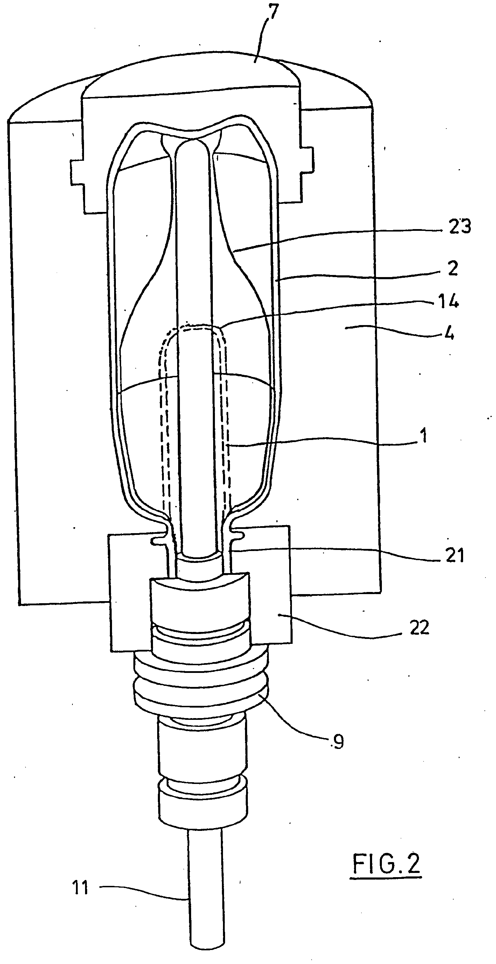

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positio-nierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

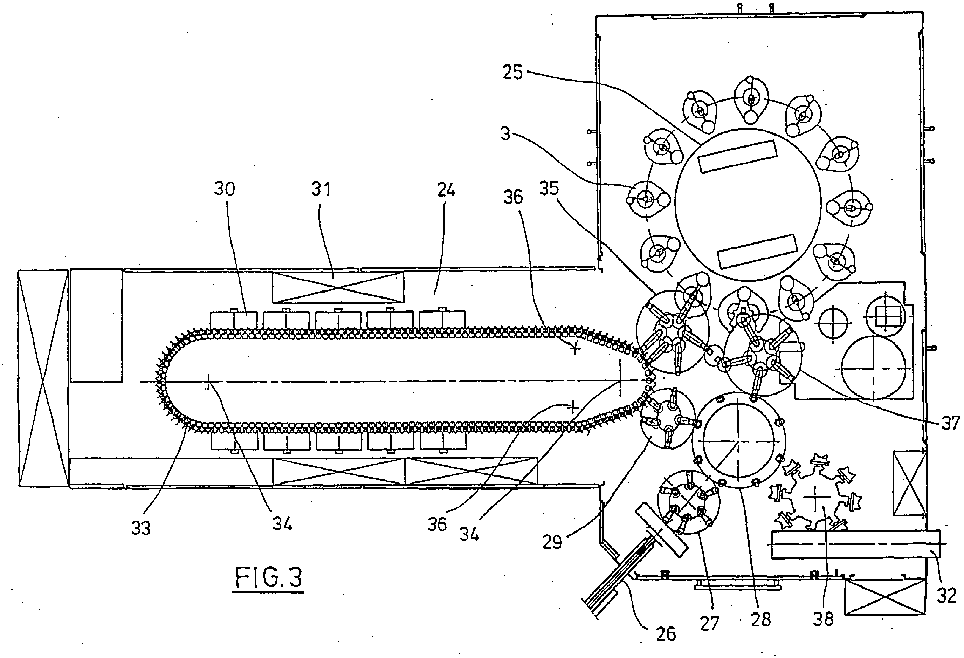

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druck-niveau zugeführt wird und in eine sich anschließende Haupt-blasphase unterteilt, in der Gas mit einem höheren Druck-niveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

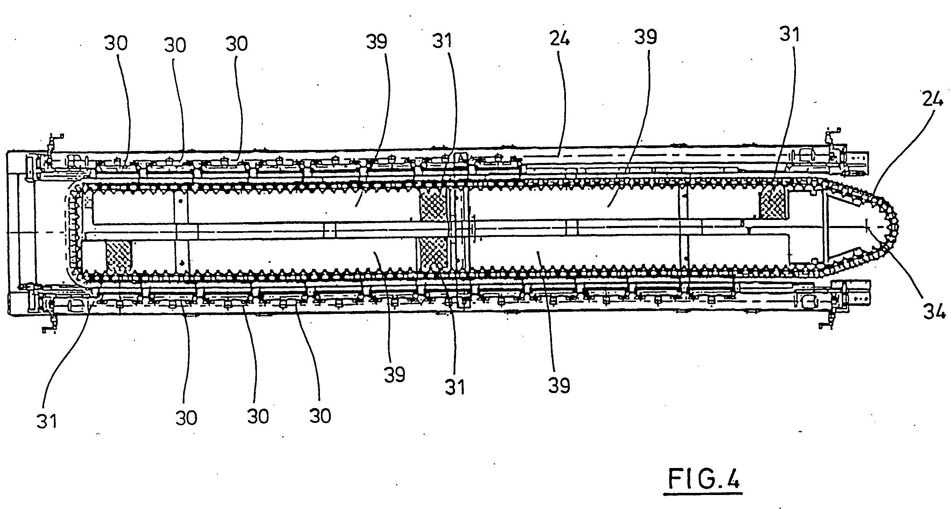

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leisten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

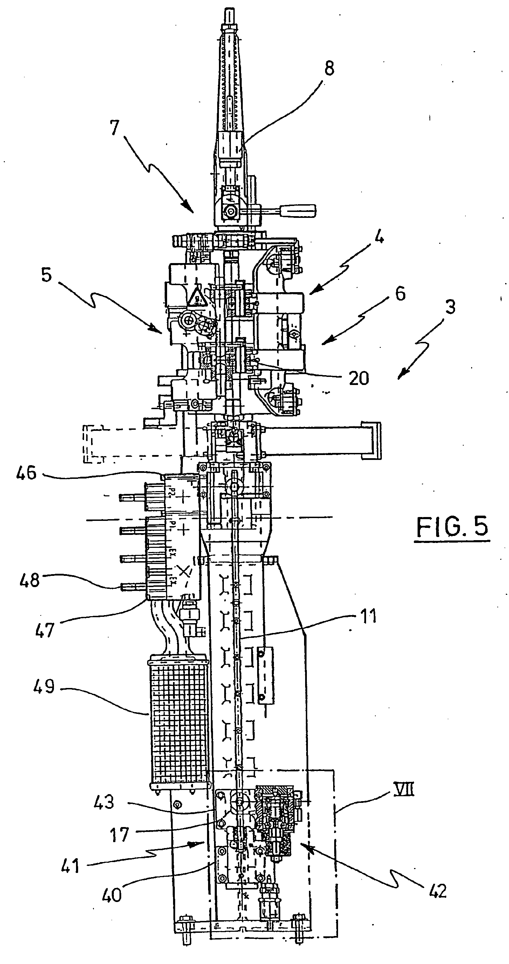

Fig. 5 zeigt eine gegenüber der Darstellung .in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (44) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (44) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

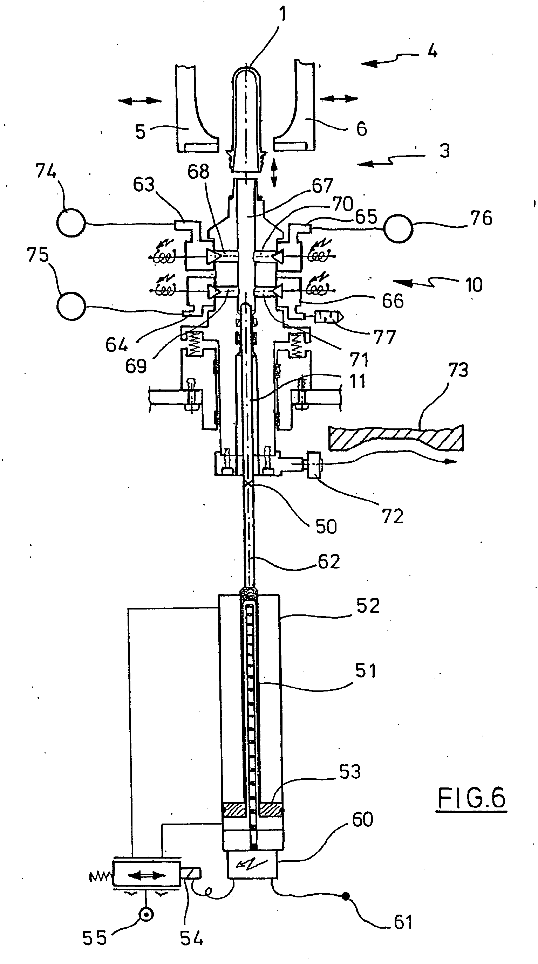

Fig. 6 zeigt eine Ausführungsform, bei der die Reckstange (11) über eine Kopplungsstelle (50) mit einer Positionierstange (51) gekoppelt ist. Grundsätzlich können die Reckstange (11) und die Positionierstange (51) auch einteilig ausgebildet werden, eine zweiteilige Ausführung ermöglicht aber einen produktabhängigen Austausch der Reckstange (11) ohne Änderungen am Reckstangenantrieb. Die Positionierstange (51) ist beim dargestellten Ausführungsbeispiel koaxial in einem Zylinder (52) geführt und von einem Kolben (53) verstellbar. Der Zylinder (52) ist über ein Ventil (54) an eine Versorgung (55) angeschlossen. Beim dargestellten Ausführungsbeispiel handelt es sich um eine pneumatische Versorgung (55) und das Ventil (54) kann als ein Magnetventil ausgebildet sein. Über das Ventil (54) ist zur Durchführung sowohl von Hub- als auch von Senkvorgängen der Reckstange (11) sowohl ein Bereich oberhalb als auch ein Bereich unterhalb des Kolbens (53) mit Druck beaufschlagbar.

Bei der in Fig. 6 dargestellten Ausführungsform erfolgt eine Blasverformung der Vorformlinge (1) in Behälter (2) mit den Mündungsabschnitten in lotrechter Richtung nach unten orientiert. Die Anordnung kann aber auch gegenüber der Darstellung in Fig. 6 um 180 ° Grad gedreht eingesetzt werden, so daß die Vorformlinge (1) mit ihren Mündungsabschnitten in lotrechter Richtung nach oben in die Behälter (2) umgeformt werden.

Gemäß dem Ausführungsbeispiel in Fig. 6 sind die Positionierstange (51) und der Kolben (53) starr miteinander verbunden. Dies kann beispielsweise durch das Einschrauben eines Außengewindes der Positionierstange (51) in das Innengewinde einer zugeordneten Ausnehmung des Kolbens (53) erfolgen. Die Positionierstange (51) umschließt mit einem Stangeninnenraum (56) einen Markierungsstab (57), der mit einer Mehrzahl von Markierungen (58) versehen ist, die in Längsrichtung (62) hintereinander angeordnet sind. Unter Verwendung der Markierungen (58) wird von einem nicht dargestellten Sensor die jeweilige Position der Positionierstange (51) erfaßt und an die Steuereinheit (60) übertragen. Die Steuereinheit (60) steuert über das Ventil (54) die pneumatische Versorgung des Zylinders (52) und realisiert hierdurch eine Positionsregelung für die Positionierstange (51).

Das Ventil (54) kann beispielsweise als ein 5/3-Wegeventil ausgebildet sein. Alternativ zu einer Anordnung der Positionsmarkierungen im Bereich eines Markierungsstabes (57) ist es auch möglich, entsprechende Markierungen an der Positionierstange (51) vorzusehen und den Positionssensor beispielsweise im Bereich des Markierungsstabes (57), an einem anderen Ort innerhalb des Stangeninnenraumes (56) oder außerhalb der Positionierstange (51) oder des Kolbens (53) zu positionieren.

Gemäß einer weiteren Ausführungsform wird als Positionsmeßsystem ein Linearmotor verwendet. Gemäß einer besonderen Ausführungsform trägt der Linearmotor nicht zu einem Antrieb der Positionierstange (51) bei, sondern stellt lediglich das Wegmeßsystem bereit. Hierdurch kann ein gering dimensionierter Linearmotor mit geringem Baugewicht und geringem Bauvolumen verwendet werden, der darüber hinaus auch preiswert ist. Der Linearmotor wird somit bei dieser Ausführungsform lediglich als hochgenaues Wegmeßsystem genutzt.

Die Positionierstange (51) besitzt eine Wegmessung zur Erfassung einer jeweiligen Positionierung der Antriebsstange (58). Über das in die Positionierstange (51) integrierte Wegmeßsystem ist es möglich, die Zeitpunkte zur Einschaltung der Blasventile für die Blasstation (3) zu steuern. Es handelt sich hierbei um mindestens eines der Ventile (63, 64, 65, 66) für einen Vorblasdruck, den Hauptblasdruck, eine Blasluftrückführung sowie die Entlüftung des geblasenen Behälters (3). Es kann hierdurch eine exakte Abstimmung zwischen dem zeitlichen Verlauf des Reckens und des Blasens erreicht werden.

Fig. 6 zeigt darüber hinaus eine Ausführung des Anschlußkolbens (10) derart, daß Blasluftventile (63, 64), ein Blasluftrückführventil (65) sowie ein Entlüftungsventil (66) direkt am Anschlußkolben (10) angeordnet und gemeinsam mit diesem positionierbar sind. Ein Innenraum (67) des Anschlußkolbens (10) ist über Verbindungskanäle (68, 69, 70, 71) mit den jeweiligen Ventilen (63, 64, 65, 66) verbunden. Eine Positionierung des Anschlußkolbens (10) kann kurvengesteuert derart erfolgen, daß eine mit dem Anschlußkolben (10) verbundene Kurvenrolle (72) entlang einer Steuerkurve (73) geführt wird. Das Blasluftventil (63) ist mit einer Niederdruckversorgung (74) verbunden, das Blasluftventil (64) ist an eine Hochdruckversorgung (75) angeschlossen. Das Blasluftrückführventil (65) ist mit einem Rückführsystem (76) verbunden und das Entlüftungsventil (66) ist an einen Schalldämpfer (77) angeschlossen.

Durch die Kombination des pneumatischen Antriebes und der elektrischen Regelung ist es möglich, bei geringem Baugewicht und hohen bereitstellbaren Reckkräften für nahezu beliebige Größen der Behälter (2) eine programmierbare Reckbewegung bereitzustellen. Insbesondere ist es möglich, ohne Auswechslung von mechanischen Reckkurven mit hohem Gewicht über eine elektronische Bedienungssteuerung eine Anpassung an unterschiedliche herzustellende Produkte vorzunehmen.

Gemäß einer weiteren Ausführungsform ist auch daran gedacht, individuell jede Blasstation (3) mit einer eigenen Steuerung auszustatten, die örtlich verteilt den jeweiligen Blasvorgang steuert. Es werden hierdurch sehr einfache und störungsunanfällige Systeme bereitgestellt, so daß auch bei einem lokalen Ausfall einzelner Komponenten die weiteren Blasstationen funktionsfähig bleiben.

## Patentansprüche

1. Verfahren zur Positionierung eines Bauelementes einer Blasmaschine, nämlich zur Positionierung einer Reckstange (11), bei dem ein Fluidantrieb das Bauelement entlang einer Führung bewegt, wobei mindestens eine Positionsmarkierung des Bauelementes von mindestens einem Sensor erfasst wird, wobei ein Ausgangssignal des Sensors einer Steuereinheit zugeführt wird und dass die Steuereinheit eine Position des Bauelements durch eine Variation der Zufuhr des Fluids des Fluidantriebes in Abhängigkeit von Ausgangssignal des Sensors regelt, wobei als Fluidantrieb ein pneumatischer Antrieb verwendet wird, **dadurch gekennzeichnet, dass** als Sensor ein Linearmotor verwendet wird.

2. Verfahren nach Anspruch 1, **dadurch gekennzeichnet, dass** der Fluidantrieb eine lineare Bewegung durchführt.

3. Verfahren nach einem der Ansprüche 1 bis 2, **dadurch gekennzeichnet, dass** der Sensor die Position einer Mehrzahl von Markierungen erfasst.

4. Verfahren nach einem der Ansprüche 1 bis 3, **dadurch gekennzeichnet, dass** die Positionserfassung optisch durchgeführt wird.

5. Verfahren nach einem der Ansprüche 1 bis 3, **dadurch gekennzeichnet, dass** die Positionserfassung magnetisch durchgeführt wird.

6. Verfahren nach einem der Ansprüche 1 bis 5, **dadurch gekennzeichnet, dass** von der Steuereinheit ein elektrisch steuerbares Ventil angesteuert wird.

7. Verfahren nach einem der Ansprüche 1 bis 6, **dadurch gekennzeichnet, dass** als Fluidantrieb ein innerhalb eines Zylinders geführter Kolben verwendet wird.

8. Verfahren nach einem der Ansprüche 1 bis 7, **dadurch gekennzeichnet, dass** der Kolben zweiseitig vom Steuerdruck beaufschlagbar ist.

9. Verfahren nach einem der Ansprüche 1 bis 8, **dadurch gekennzeichnet, dass** eine Blasventilsteuerung in Abhängigkeit einer bereitgestellten Positionserfassung durchgeführt wird.

10. Vorrichtung zur Positionierung eines Bauelementes einer Blasmaschine, nämlich zur Positionierung der Reckstange (11) einer Blasmaschine, die einen Fluidantrieb sowie eine Führung für eine Bewegung des Bauelementes aufweist, wobei das Bauelement mindestens eine Positionsmarkierung aufweist und wobei im Bereich der Führung mindestens ein Sensor zur Erfassung der Positionsmarkierung angeordnet ist sowie dass der Sensor mit einer Steuereinheit für den Fluidantrieb verbunden ist, die mit einem Stellelement zur Variation der Zufuhr des Fluids des Fluidantriebs in Abhängigkeit von Ausgangssignal des Sensors und zur Durchführung einer Positionsregelung verbunden ist, wobei der Fluidantrieb als ein pneumatischer Antrieb ausgebilded ist **dadurch gekennzeichnet, dass** der Sensor als Teil eines Linearmotors ausgebildet ist.

11. Vorrichtung nach Anspruch 10, **dadurch gekennzeichnet, dass** der Fluidantrieb zur Durchführung einer linearen Bewegung ausgebildet ist.

12. Vorrichtung nach einem der Ansprüche 10 bis 11, **dadurch gekennzeichnet, dass** entlang einer Bewegungsbahn des Fluidantriebes mindestens zwei Markierungen angeordnet sind.

13. Vorrichtung nach einem der Ansprüche 10 bis 12, **dadurch gekennzeichnet, dass** der Sensor zur optischen Positionserfassung ausgebildet ist.

14. Vorrichtung nach einem der Ansprüche 10 bis 12, **dadurch gekennzeichnet, dass** der Sensor zur magnetischen Positionserfassung ausgebildet ist

15. Vorrichtung nach einem der Ansprüche 10 bis 14, **dadurch gekennzeichnet, dass** das Stellelement als elektrisch steuerbares Ventil ausgebildet ist.

16. Vorrichtung nach einem der Ansprüche 10 bis 15, dadurch gekenntzeichnet, dass der Fluidantrieb mindestens einen in einem Zylinder (52) geführten Kolben (53) aufweist.

17. Vorrichtung nach Anspruch 16, **dadurch gekennzeichnet, dass** der Kolben (53) zweiseitig von dem unter Druck stehenden Fluid beaufschlagbar angeordnet ist.

18. Vorrichtung nach einem der Ansprüche 10 bis 17, **dadurch gekennzeichnet, dass** eine Ventilsteuerung einer Blasstation (3) der Blasmaschine mit der Positionserfassung des Fluidantriebes gekoppelt ist

## Claims

1. A method for positioning a component of a blow-moulding machine, namely for positioning a stretching rod (11), in the case of which a fluid drive moves the component along a guide, wherein at least one positioning marker of the component is detected by at least one sensor, wherein an output signal of the sensor is supplied to a control unit, and that the control unit regulates a position of the component by means of a variation of the supply of the fluid of the fluid drive as a function of output signal of the sensor, wherein a pneumatic drive is used as fluid drive, **characterised in that** a linear motor is used as sensor.

2. The method according to claim 1, **characterised in that** the fluid drive performs a linear movement.

3. The method according to any one of claims 1 to 2, **characterised in that** the sensor detects the position of a plurality of markers.

4. The method according to any one of claims 1 to 3, **characterised in that** the position detection is performed optically.

5. The method according to any one of claims 1 to 3, **characterised in that** the position detection is performed magnetically.

6. The method according to any one of claims 1 to 5, **characterised in that** the control unit controls an electrically controllable valve.

7. The method according to any one of claims 1 to 6, **characterised in that** a piston, which is guided inside a cylinder, is used as fluid drive.

8. The method according to any one of claims 1 to 7, **characterised in that** the control pressure can be applied to the piston from two sides.

9. The method according to any one of claims 1 to 8, **characterised in that** a blow valve control is performed as a function of a provided position detection.

10. A device for positioning a component of a blow-moulding machine, namely for positioning a stretching rod (11) by means of a blow-moulding machine, which has a fluid drive as well as a guide for moving the component, wherein the component has at least one positioning marker, and wherein at least one sensor for detecting the position marker is arranged in the area of the guide, and that the sensor is connected to a control unit for the fluid drive, which is connected to a control member for the variation of the supply of the fluid of the fluid drive as a function of output signal of the sensor and for performing a position regulation, wherein the fluid drive is embodied as a pneumatic drive, **characterised in that** the sensor is embodied as part of a linear motor.

11. The device according to claim 10, **characterised in that** the fluid drive is embodied for performing a linear movement.

12. The device according to any one of claims 10 to 11, **characterised in that** at least two markers are arranged along a trajectory of the fluid drive.

13. The device according to any one of claims 10 to 12, **characterised in that** the sensor is embodied for the optical position detection.

14. The device according to any one of claims 10 to 12, **characterised in that** the sensor is embodied for the magnetic position detection.

15. The device according to any one of claims 10 to 14, **characterised in that** the control member is embodied as electrically controllable valve.

16. The device according to any one of claims 10 to 15, **characterised in that** the fluid drive has at least one piston (53), which is guided in a cylinder (52).

17. The device according to claim 16, **characterised in that** the piston (53) is arranged so that pressurized fluid can be thereto applied on both sides.

18. The device according to any one of claims 10 to 17, **characterised in that** a valve control of a blow-moulding station (3) of the blow-moulding machine is coupled to the position detection of the fluid drive.

## Revendications

1. Procédé de positionnement d'un composant d'une machine de moulage par soufflage, à savoir pour le positionnement d'une barre d'étirage (11), dans le cadre duquel une commande à fluide déplace le composant le long d'un guide et au moins un repère de position du composant est détecté par au moins un détecteur, un signal de sortie du détecteur étant conduit vers une unité de commande et cette unité de commande réglant une position du composant par une variation de l'adduction du fluide de la commande à fluide en fonction du signal de sortie du détecteur, la commande à fluide mise en oeuvre étant une commande pneumatique, **caractérisé en ce que** l'on utilise un moteur linéaire en guise de détecteur.

2. Procédé selon la revendication 1, **caractérisé en ce que** la commande à fluide effectue un mouvement linéaires.

3. Procédé selon l'une des revendications 1 à 2, **caractérisé en ce que** le détecteur détecte la position de plusieurs repères.

4. Procédé selon l'une des revendications 1 à 3, **caractérisé en ce que** la détection de la position est un procédé optique.

5. Procédé selon l'une des revendications 1 à 3, **caractérisé en ce que** la détection de la position est un procédé magnétique.

6. Procédé selon l'une des revendications 1 à 5, **caractérisé en ce que** l'unité de commande contrôle une soupape à commande électrique.

7. Procédé selon l'une des revendications 1 à 6, **caractérisé en ce que** l'on utilise un piston guidé à l'intérieur d'un cylindre en guise de commande à fluide.

8. Procédé selon l'une des revendications 1 à 7, **caractérisé en ce que** la pression de commande peut agir sur le piston des deux côtés.

9. Procédé selon l'une des revendications 1 à 8, **caractérisé en ce qu'**une commande de soupape de soufflage est effectuée en fonction d'une valeur de position détectée mise à disposition.

10. Dispositif de positionnement d'un composant d'une machine de moulage par soufflage, à savoir pour le positionnement d'une barre d'étirage (11) d'une machine de moulage par soufflage, lequel dispositif présente une commande à fluide ainsi qu'un guide pour un déplacement du composant, ce dernier présentant au moins un repère de position et un détecteur au moins étant agencé dans la zone du guide pour détecter le repère de position, le détecteur étant relié à une unité de commande pour le contrôle de la commande à fluide, laquelle est connectée à un élément de réglage pour la variation de l'adduction du fluide de la commande à fluide en fonction du signal de sortie du détecteur et pour effectuer un réglage de position, la commande à fluide étant réalisée sous forme de commande pneumatique, **caractérisé en ce que** le détecteur est réalisé comme partie d'un moteur linéaire.

11. Dispositif selon la revendication 10, **caractérisé en ce que** la commande à fluide est conçue pour réaliser un mouvement linéaire.

12. Dispositif selon l'une des revendications 10 à 11, **caractérisé en ce qu'**au moins deux repères sont agencés le long d'une trajectoire de la commande à fluide.

13. Dispositif selon l'une des revendications 10 à 12, **caractérisé en ce que** le détecteur est conçu pour une détection de position optique.

14. Dispositif selon l'une des revendications 10 à 12, **caractérisé en ce que** le détecteur est conçu pour une détection de position magnétique.

15. Dispositif selon l'une des revendications 10 à 14, **caractérisé en ce que** l'élément de réglage est réalisé sous forme de soupape à commande électrique.

16. Dispositif selon l'une des revendications 10 à 15, **caractérisé en ce que** la commande à fluide présente au moins un piston (53) guidé à l'intérieur d'un cylindre (52).

17. Dispositif selon la revendication 16, **caractérisé en ce que** le piston (53) est agencé de façon à ce que le fluide sous pression puisse agir sur lui des deux côtés.

18. Dispositif selon l'une des revendications 10 à 17, **caractérisé en ce qu'**une commande de soupape d'une station de soufflage (3) de la machine de moulage par soufflage est couplée à la détection de position de la commandes à fluide.
